# EUROPEAN PATENT SPECIFICATION

(11) **EP 4 234 352 B1**
(45) Date of publication and mention of the grant of the patent: **03.09.2025**
(21) Application number: 21882382.1
(22) Date of filing: 01.07.2021
(51) Int. Cl.: B60W 30/18, B60C 17/00, B60C 19/00, B60C 23/20, F02D 29/02, B60C 23/04, B60W 30/14

(54) **VEHICLE SPEED CONTROL SYSTEM**
GESCHWINDIGKEITSREGELSYSTEM FÜR EIN FAHRZEUG
SYSTÈME DE RÉGULATION DE VITESSE DE VÉHICULE

(30) Priority: 21.10.2020 JP 2020176887
(43) Date of publication of application: 30.08.2023
(73) Proprietor: BRIDGESTONE CORPORATION, Chuo-ku Tokyo 104-8340 (JP)
(72) Inventor: OSAWA, Yasuo, Tokyo 104-8340 (JP); YAMAMOTO, Masahiko, Tokyo 104-8340 (JP)
(74) Representative: Marks & Clerk LLP
(86) International application number: PCT/JP2021/025027
(87) International publication number: WO 2022/085239

(56) References cited:
- EP-A1- 3 674 159
- JP-A- 2005 088 874
- JP-A- 2005 505 457
- US-A1- 2003 033 072
- US-A1- 2005 057 347

## Description

### Technical Field

The present invention relates to a vehicle speed control system.

### Background Art

There is known a vehicle behavior control device that detects a state of a tire and controls the traveling of a vehicle (see, for example, Japanese Patent No. 4466386).

In this vehicle behavior control device, control that reduces the speed of the vehicle is carried out in a case in which a run-flat tire enters into a run-flat state.

US2003033072A1 discloses tire over- or under-inflation can create problems in vehicle operation. To limit the effects of out-of-range tire pressure, vehicle speed is automatically controlled if the vehicle speed is not appropriate for either or both of measured tire air pressure and measured tire temperature.

US2005057347A1 discloses a method for ensuring safe tire emergency running operation in a motor vehicle that is equipped with tires that have emergency running properties when the tire pressure is greatly reduced or absent altogether, a device is provided for detecting an emergency running mode of the motor vehicle. The device for limiting the driving speed limits the driving speed of the motor vehicle whenever emergency running is detected.

EP3674159A1 discloses an arithmetic model generation system includes a sensor information acquisition unit, a tire force calculator, and an arithmetic model update unit. The sensor information acquisition unit acquires acceleration of a tire. The tire force calculator includes an arithmetic model for calculating tire force based on the acceleration, and calculates the tire force by inputting the acceleration acquired by the sensor information acquisition unit. The arithmetic model update unit compares tire axial force measured by the tire and the tire force calculated by the tire force calculator, and updates the arithmetic model.

### SUMMARY OF INVENTION

### Technical Problem

By the way, due to traveling, the rubber that structures a pneumatic tire deforms repeatedly and generates heat. The amount of heat that is generated also becomes great at a region where the deformation (strain, stress) of the rubber is great. If the temperature of the rubber becomes excessively high, there are cases in which the vicious cycle of the rubber softening, tire deformation increasing, and the tire temperature rising arises. Therefore, if traveling is continued in a state in which the temperature of the rubber has become high, the rubber will ultimately be destroyed, and traveling of the vehicle will become difficult, and there are cases in which the vehicle will not be able to travel to its destination.

In the prior art, although it is possible to reduce the speed of the vehicle at the time when a tire is punctured, consideration is not given to the generation of heat at the tire. Therefore, there is the possibility that traveling will be continued in a state in which the rubber of the tire has become an excessively high temperature, and ultimately, the tire breaking down can be imagined.

Further, in the prior art, there are cases in which the speed of the vehicle is reduced excessively in order to control the behavior of the vehicle, and there is also the possibility that the traveling time to the destination will be extended.

In order to suppress destruction of the rubber, the generation of heat of the rubber must be suppressed. Further, if the speed can be raised in a range in which the generation of heat at the rubber can be suppressed such that the aforementioned vicious cycle does not occur, it is possible to reach the destination without causing breakdown of the tire, and the traveling time to the destination can be shortened.

In consideration of the above-described circumstances, an object of the present invention is to provide a vehicle speed control system that takes tire temperature into consideration and can shorten the traveling time to a destination without causing the tire to break down.

### Solution to Problem

According to a first aspect of the invention there is provided a vehicle speed control system as specified in claim 1.

Due to traveling, the elastic body such as rubber or the like that structures the tire elastically deforms and generates heat, and the temperature thereof rises. If the temperature of the rubber rises excessively, the rubber softens. If the rubber softens, there are cases in which this results in the vicious cycle of tire deformation increasing and moreover the temperature of the rubber rising. Further, if the temperature of the rubber rises excessively, there are cases in which the rubber deteriorates or the rubber is destroyed, which leads to a deterioration in the durability of the tire.

In the vehicle speed control system relating to the first aspect, the control device controls the speed of the vehicle on the basis of the measured temperature of the tire and suppresses generation of heat of the rubber, so that the above-described vicious cycle does not arise. By suppressing generation of heat of the rubber in this way, the aforementioned vicious cycle is suppressed, the speed can be raised within a range in which the tire does not break down, and it is possible shorten the traveling time to the destination without causing the tire to break down.

### Advantageous Effects of Invention

As described above, in accordance with the vehicle speed control system of the present invention, the temperature of a tire is taken into consideration, and the traveling time to a destination can be shortened without the causing the tire to break down.

### BRIEF DESCRIPTION OF DRAWINGS

Fig. 1 is a cross-sectional view along a tire rotational axis, illustrating a tire / rim wheel assembly that is used in a vehicle speed control system not according to the present invention, but useful for understanding the present invention.
Fig. 2A is a block drawing illustrating the overall structure of the vehicle speed control system relating to a first embodiment.
Fig. 2B is a block drawing illustrating the schematic structure of a control device of the vehicle speed control system relating to the first embodiment.
Fig. 3 is a flowchart illustrating control of the vehicle speed control system relating to the first embodiment.
Fig. 4 is a cross-sectional view along a tire rotational axis, illustrating a tire / rim wheel assembly that is used in a vehicle speed control system relating to a first embodiment.
Fig. 5 is a flowchart illustrating control of the vehicle speed control system relating to the first embodiment.

### DESCRIPTION OF EMBODIMENTS

### [First Example]

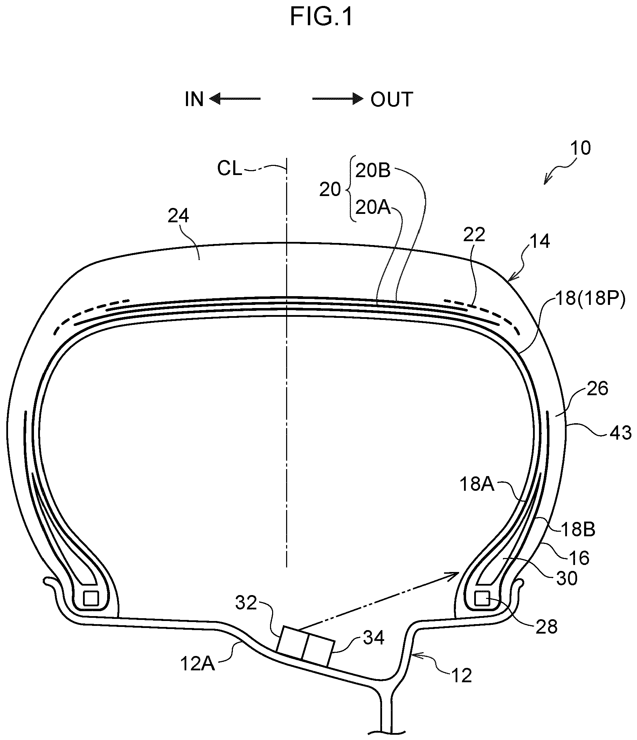

A vehicle 36, to which a vehicle speed control system 8 not according to the present invention, but useful for understanding the present invention, is described by using Fig. 1 through Fig. 3.

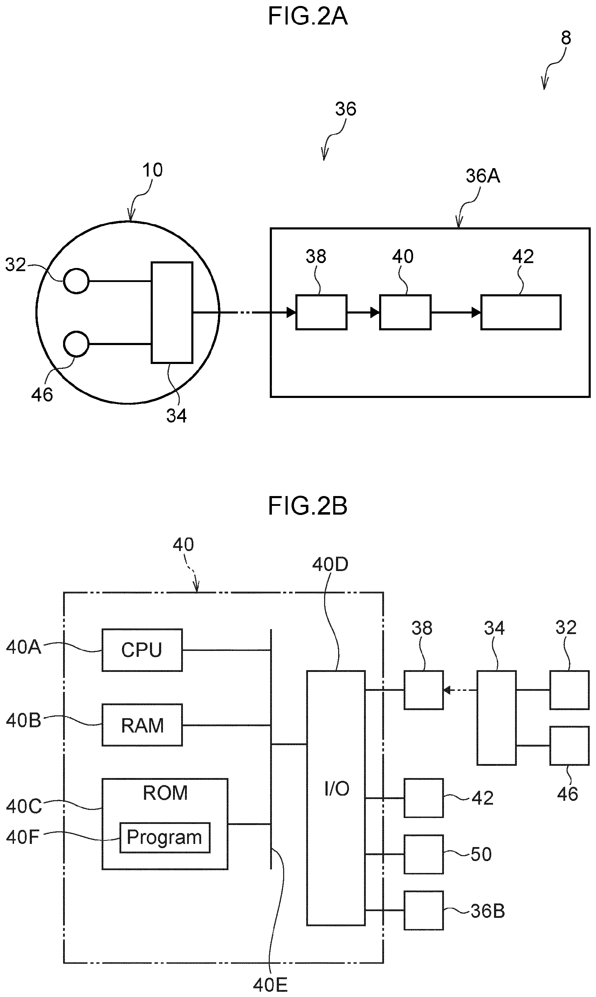

As illustrated in Fig. 1, a tire / rim wheel assembly 10 is provided at the vehicle 36 (not illustrated in Fig. 1; refer to Fig. 2A) is a structure in which a pneumatic tire 14 is mounted on a rim 12A of a rim wheel 12. Note that the pneumatic tire 14 is a usual tire for a passenger vehicle. In Fig. 1, arrow IN indicates the vehicle inner side direction, and arrow OUT indicates the vehicle outer side direction.

The pneumatic tire 14 has a carcass 18 that spans in a toroidal form over a pair of bead portions 16. The carcass 18 is structured from a single carcass ply 18P in which plural cords are lined-up parallel to one another and coated with rubber.

A belt 20, which is formed from two belt plies that are a first belt ply 20A and a second belt ply 20B, is disposed at the tire radial direction outer side of the carcass 18.

Note that the end portions of the belt 20 are covered by belt reinforcing layers 22.

A tread rubber layer 24 is disposed at the tire radial direction outer side of the belt 20. Further, side rubber layers 26 are disposed at the tire axial direction outer sides of the carcass 18.

The end portions of the carcass ply 18P are wound upwardly on bead cores 28 of the bead portions 16 toward the tire radial direction outer side.

Here, the portion, which extends from the one bead core 28 to the another bead core 28 of the carcass ply 18P, is main body portion 18A. The portions that are wound upward and extend from the bead cores 28 toward the tire radial direction outer side are upwardly-wound portions 18B. Bead fillers 30, which are formed from a rubber of a high hardness and which extend from the bead cores 28 toward the tire radial direction outer side, are disposed between the main body portion 18A and the upwardly-wound portions 18B of the carcass ply 18P.

A thermometer 32 and a transmitter 34 are mounted to the outer peripheral portion of the rim 12A. The thermometer 32 is, as an example, a non-contact-type infrared thermometer.

As illustrated in Fig. 2A, measured temperature data that is measured by the thermometer 32 is transmitted wirelessly by the transmitter 34 to a receiver 38 provided at a vehicle body 36A.

A control device 40 that controls the output of an engine 36B is provided at the vehicle body 36A.

The schematic structure of the control device 40 that can be made to function as a vehicle speed control device as an example is illustrated in Fig. 2B. Note that the control device 40 can be applied to a computer for engine control that is installed in the vehicle 36 that is an automobile or the like as an example.

The control device 40 is structured by a computer that includes a CPU 40A that is an example of a hardware processor, a RAM 40B, a ROM 40C, an I/O 40D and the like. The CPU 40A, the RAM 40B, the ROM 40C and the I/O 40D are connected to a bus 40E that can transmit and receive data and commands. Further, a computing program 40F is stored in the ROM 40C.

Further, the engine (fuel injection device) 36B, the receiver 38, a display device 42, a warning lamp 50, and the like are connected to an I/O 42D.

The measured temperature data that is transmitted by the transmitter 34 is sent to the control device 40 via the receiver 38. Note that the display device 42 is provided at the instrument panel of the vehicle 36, and various types of information relating to the vehicle 36 can be displayed on the display device 42.

Upper limit temperature T1 of the pneumatic tire 14, lower limit pressure P1 of the pneumatic tire 14, upper limit temperature T2 at the time of reduced internal pressure, and the like are stored in advance in the ROM 40C of the control device 40.

At the control device 40, the CPU 40A reads-out the computing program 40F stored in the ROM 40C, and expands the computing program 40F in the RAM 40B, and the expanded computing program 40F is executed.

### (Operation, Effects)

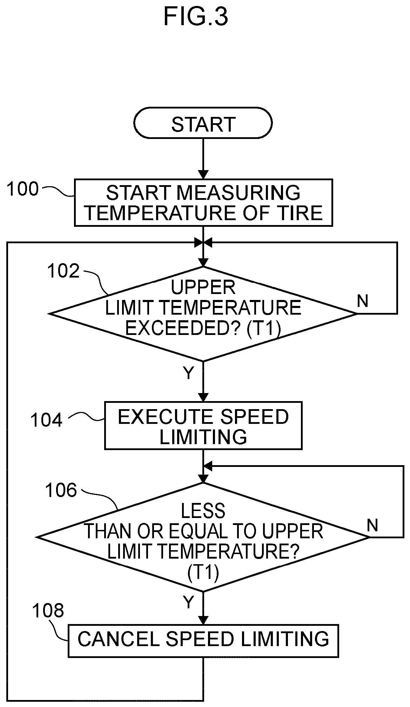

Speed control at the vehicle speed control system 8 is described next on the basis of the flowchart shown in Fig. 3.
(1) In step 100, measurement of the temperature of the tire inner surface of the bead portion 16 is started by the thermometer 32. The measured temperature data that is measured by the thermometer 32 is wirelessly transmitted by the transmitter 34 to the receiver 38. Note that the temperature measurement is started, as an example, due to the ignition key of the vehicle 36 (the switch of the main power source of the vehicle 36) being turned on, and is continued until the ignition key is turned off.
(2) In step 102, it is judged whether or not the measured temperature of the bead portion 16 exceeds the upper limit temperature T1 that is set in advance. If the measured temperature of the bead portion 16 exceeds the upper limit temperature T1 that is set in advance, the routine moves on to step 104, and, if the measured temperature does not exceed the upper limit temperature T1, the routine returns to step 102.
(3) In step 104, the control device 40 executes speed limiting. When speed limiting is executed, the engine 36B is controlled, and, even if the driver depresses the accelerator pedal of the vehicle 36, the vehicle 36 does not exceed greater than or equal to a speed limit (V1) that is set in advance. Due thereto, generation of heat of the bead portions 16 (in particular, the bead fillers 30) can be suppressed, and it is possible to lower the temperature of the bead portions 16.

By executing speed limiting in this way, the bead portions 16 becoming high temperature, and the rubber of the bead fillers 30 softening and deteriorating, can be suppressed, and the durability of the bead portions 16 can be ensured.

Note that, in order to inform the driver that speed limiting is carried out, in step 104, a warning by characters or the like may be displayed on the display device 42, or the warning lamp 50 may be turned on.

(4) In next step 106, it is judged whether or not the temperature of the bead portion 16 has become less than or equal to the upper limit temperature T1 that is set in advance. Here, if the temperature of the bead portion 16 has become less than or equal to the upper limit temperature T1 that is set in advance, the routine moves on to step 108, and if the temperature of the bead portion 16 has not become less than or equal to the upper limit temperature T1 that is set in advance, the routine returns to step 106.

(5) In step 108, the control device 40 cancels the speed limiting. Due thereto, the driver can make the vehicle 36 travel at greater than or equal to the speed limit (V1) that is set in advance.

In this way, by using the vehicle speed control system 8, at the time of traveling of the pneumatic tire 14, generation of heat of the bead portions 16 can be suppressed, the vehicle 36 can be made to travel fast within a range that does not cause breakdown of the bead portions 16, the traveling time to the destination can be shortened, and the vehicle 36 can go to the destination quickly.

Note that the temperature of the bead portion 16 is measured, and speed limiting is executed in a case in which the temperature of the bead portion 16 exceeds the upper limit temperature T1 that is set in advance. However, speed limiting may be executed in a case in which the temperature of a region other than the bead portion 16 is measured, and the measured temperature of the region exceeds the upper limit temperature T1 that is set in advance.

The temperature of the bead portion 16 at the vehicle outer side is measured, but the temperature of the bead portion 16 at the vehicle inner side may be measured, or the temperatures of the bead portions 16 at both the vehicle outer side and the vehicle inner side may be measured.

A region where it is easy for the rubber to generate heat, or in other words, a region where the strain during traveling is large, for example, the cord end portions (vicinities of the belt ends), the tire maximum width portion, and the like are regions other than the bead portion 16.

For example, in vicinities of the cord end portions of the carcass or the belt, there are portions having and portions not having cords that have a higher Young's modulus than the rubber, and these are portions where the rigidity as a structural body varies sharply and regions where large stress and strain arise when traveling. It is easy for a rise in temperature to occur at such portions where there is large strain. Therefore, by measuring the temperature at such a portion and controlling the traveling speed by using this as a reference, the vicious cycle can be prevented more, and breakdown of the pneumatic tire 14 can be suppressed.

Further, in a case of traveling at high speed in a state in which excessive load is applied to the pneumatic tire 14, there are cases in which the tread rubber layer 24 generates heat excessively. In cases in which such a situation is envisaged, the temperature at the tread inner surface side may be measured.

Note that, in the vehicle speed control system 8, the place where the temperature of the pneumatic tire 14 is measured is not limited to one place, and may be plural places. Further, as needed, the upper limit temperature T1 can be made to differ per region of the pneumatic tire 14.

### [First Embodiment]

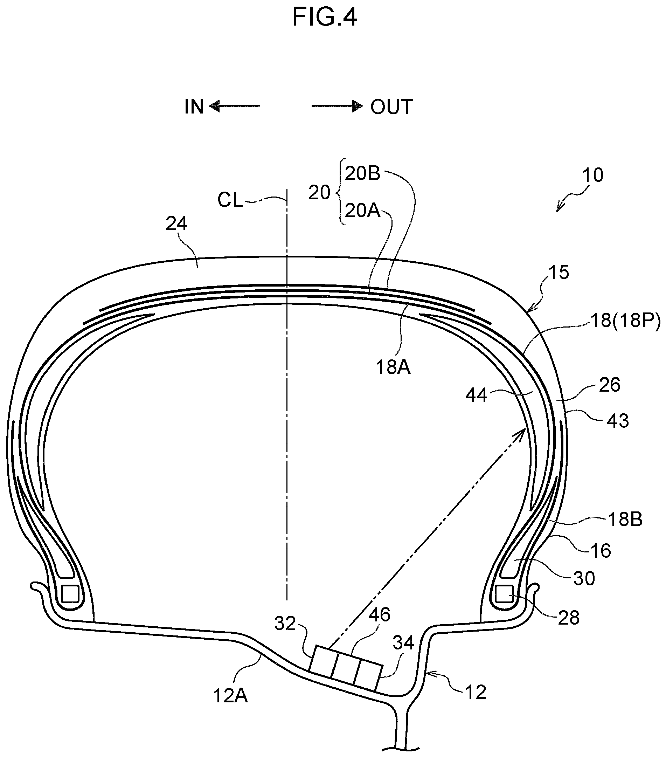

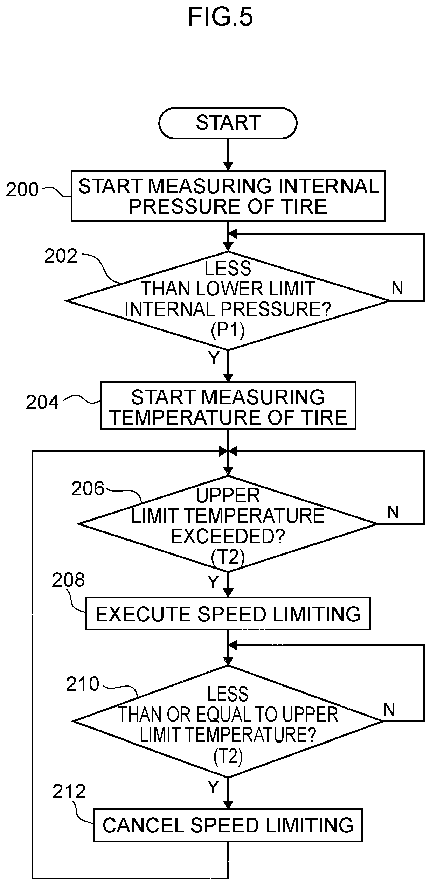

The vehicle speed control system 8 relating to a first embodiment of the present invention is described next in accordance with Fig. 4 and Fig. 5. Note that structures that are the same as those of the first example are denoted by the same reference numerals, and description thereof is omitted.

As illustrated in Fig. 4, a so-called side-reinforced-type run-flat tire 15 is mounted to the rim 12A of the present embodiment. Side reinforcing rubbers 44 are provided at tire side portions 43.

In addition to the thermometer 32, a pressure gauge 46 that measures the internal pressure of the tire is provided at the rim 12A. The measured pressure data that is measured by the pressure gauge 46 is transmitted from the transmitter 34 to the receiver 38. Note that the pressure gauge 46 may be mounted to the air valve of the rim 12A.

In the present embodiment, the control device 40 controls the speed of the vehicle 36 on the basis of measured temperature data and measured pressure data.

Speed control at the vehicle speed control system 8 of the present embodiment is described next on the basis of the flowchart illustrated in Fig. 5.
(1) In step 200, measurement of the internal pressure of the tire is started by the pressure gauge 46. The measured internal pressure data is transmitted by the transmitter 34 to the receiver 38. Note that the measuring of the internal pressure of the tire is started, as an example, due to the ignition key of the vehicle 36 (the switch of the main power source of the vehicle 36) being turned on, and is continued until the ignition key is turned off.
(2) In step 202, it is judged whether or not the measured internal pressure has become less than the lower limit pressure P1 that is set in advance. If the measured internal pressure is less than the lower limit pressure P1 that is set in advance, the routine moves on to step 204, and, if the measured internal pressure is not less than the lower limit pressure P1 that is set in advance, the routine returns to step 202.
   Note that a case in which the internal pressure becomes less than the lower limit pressure P1 that is set in advance is a case in which there is a puncture of the pneumatic tire 14.
(3) In step 204, the temperature of the tire inner surface at a tire maximum width portion (which is also the region where the side reinforcing rubber 44 is thickest) is measured by the thermometer 32. The measured temperature data is transmitted by the transmitter 34 to the receiver 38. Note that, in this step 204, in order to inform the driver that the internal pressure of the tire has decreased, in step 204, a warning by characters or the like may be displayed on the display device 42, or the warning lamp 50 may be turned on.
(4) In step 206, it is judged whether or not the measured temperature of the tire inner surface at the tire maximum width portion exceeds the upper limit temperature T2 at the time of reduced internal pressure that is set in advance. If the measured temperature of the tire inner surface at the tire maximum width portion exceeds the upper limit temperature T2 at the time of reduced internal pressure that is set in advance, the routine moves on to step 208, and if the measured temperature does not exceed the upper limit temperature T2 at the time of reduced internal pressure that is set in advance, the routine returns to step 206.
(5) In step 208, the control device 40 executes speed limiting. Due thereto, even if the driver depresses the accelerator pedal of the vehicle 36, the vehicle 36 does not exceed greater than or equal to a speed limit (V2) at the time of reduced internal pressure that is set in advance. Due thereto, generation of heat of the side reinforcing rubbers 44 is suppressed, and it is possible to lower the temperature of the side reinforcing rubbers 44 to less than or equal to the upper limit temperature T2 at the time of reduced internal pressure that is set in advance.

By executing speed limiting at the time of run-flat traveling in this way, the side reinforcing rubbers 44 becoming high temperature, the rubbers thereof softening and deteriorating, the side reinforcing rubbers 44 no longer being able to exhibit their original functions, and traveling becoming impossible due to destruction of the rubbers can be suppressed. Due thereto, the traveling distance at the time of running on a flat can be extended.

Further, in order to inform the driver that speed limiting due to a decrease in internal pressure is carried out, in step 208, a warning by characters or the like may be displayed on the display device 42, or the warning lamp 50 may be turned on.

(6) In next step 210, it is judged whether or not the temperature of the tire inner surface at the tire maximum width portion has become less than or equal to the upper limit temperature T2 at the time of reduced internal pressure that is set in advance. Here, if the temperature of the tire inner surface at the tire maximum width portion has become less than or equal to the upper limit temperature T2 at the time of reduced internal pressure that is set in advance, the routine moves on to step 212, and, if the temperature of the tire inner surface at the tire maximum width portion has not become less than or equal to the upper limit temperature T2 at the time of reduced internal pressure that is set in advance, the routine returns to step 210.

(7) In step 212, the control device 40 cancels the speed limiting. Due thereto, the driver can make the vehicle 36 travel at greater than or equal to the speed limit (V2) at the time of reduced internal pressure that is set in advance.

Note that, in order to inform the driver that speed limiting has been cancelled, in step 212, the fact that the speed limiting has been cancelled may be displayed by characters or the like on the display device 42. However, the warning that the internal pressure has decreased is continued.

In this way, by using the vehicle speed control system 8 of the present embodiment, at the time of run-flat traveling on the run-flat tire 15, generation of heat of the side reinforcing rubbers 44 is suppressed, the vehicle 36 can be made to travel fast within a range that does not cause breakdown of the run-flat tire 15, the traveling time to the destination can be shortened, and the vehicle 36 can go to the destination quickly.

Note that estimation of the run-flat traveling distance in accordance with an ISO run-flat test was carried out by assuming usage of a side-reinforced-type run-flat tire (tire size: 225/45RF17).

It is assumed that a temperature sensor is affixed to the tire innermost surface side of the portion that juts out furthest toward the outer side in the tire width direction, and that the measured temperature data is transmitted by using a wireless device mounted to the rim wheel, and that measurement can be carried out at an external device, and, under the premise of measuring the traveling distance on a drum tester, the traveling distance at a speed of 80 km/h until traveling becomes impossible is predicted.

Running is carried out for one hour at a speed of 80 km/h under ISO testing conditions (ISO 16992: 2018) that are the certification criterion for run-flat tires.

Estimation of the extent to which the traveling distance is extended when speed limiting is carried out as in the present embodiment on the basis of these test standards, is described hereinafter.

Estimation is carried out under the assumption that, after running at 80 km/h, at the point in time when the results of temperature measurement become 140°C, the speed is lowered to 40km/h and running is continued.

First, at the drum tester, the test tire is made to run at 80 km/h, and running is continued until the temperature becomes 140°C. In a case in which the running time at the time when the temperature reaches 140°C is 0.5 h, the traveling distance is 80 km/h × 0.5 h = 40 km.

Thereafter, if running is carried out with the speed lowered to 40 km/h that is half of 80 km/h, the generation of heat is halved, and therefore, predicting of the traveling distance is carried out by estimating that the traveling distance is 2 times that.

Accordingly, assuming that, after running for 0.5 h at 80 km/h, traveling for 1 h at 40 km/h is possible, the traveling distance is 40 km + 40 km/h × 1 h = 120 km, and it can easily be predicted that the traveling distance can be extended by carrying out speed limiting.

### [Other Embodiments]

Although an embodimen has been described above, the present invention is not limited to the above, and can, of course, be implemented by being modified in various ways other than the above, within a scope that does not depart from the gist thereof.

The vehicle to which the present invention can be applied is not limited to a passenger vehicle, and may be a bus, a truck, construction equipment, a motorcycle, a vehicle of a new transportation system or the like, and can be applied to all vehicles that use pneumatic tires.

In the first embodiment, the pneumatic tire is the side-reinforced-type run-flat tire 15, but the present invention can be applied also to a run-flat tire using a core. In a run-flat tire that uses a core, at the time of run-flat traveling, there are cases in which the outer peripheral surface of the core contacts the tire inner peripheral surface of the tire width direction central portion of the tread, and the tread generates heat. Therefore, the generation of heat at the region that contacts the core can be suppressed by measuring the temperature of the tread inner surface of that tire and carrying out speed control.

In the above-described embodiment, the non-contact-type thermometer 32 is mounted to the rim 12A, but the non-contact-type thermometer 32 may be mounted to the vehicle body 36A (the wheel house, the suspension or the like) and may measure the tire temperature from the tire outer side.

In the above-described embodiment, an infrared thermometer is used as the thermometer 32 in order to measure the temperature of the pneumatic tire 14 or the run-flat tire 15, without contact. However, a contact-type thermometer may be mounted to the tire inner surface and the tire temperature measured.

The vehicle speed control systems 8 of the above-described embodiment can also be applied to autonomous vehicles in which the vehicle 36 can be driven automatically. By incorporating the vehicle speed control system 8 into an autonomous vehicle, in a case in which the tire temperature or internal pressure or the like becomes abnormal, the traveling speed of the autonomous vehicle is lowered automatically, and the autonomous vehicle can be made to travel safely.

The vehicle speed control systems 8 of the present invention are not limited to vehicles that travel on public roads, and can also be applied to vehicles for racing or the like that make hard use of tires. Due thereto, for example, a tire breaking down and the vehicle becoming unable to travel in the middle of the course can be suppressed, and the vehicle can be made to travel to the pit.

Note that the above embodiment describes examples of suppressing breakdown of the pneumatic tire 14 and the run-flat tire 15 that use rubber as an elastic body, but the vehicle speed control systems 8 can also suppress breakdown of pneumatic tires that use a thermoplastic elastomer as the elastic body.

In the above-described embodiment, a puncture (decrease in internal pressure) is sensed by directly measuring the internal pressure of the pneumatic tire 14 by the pressure gauge 46. However, the decrease in internal pressure of the pneumatic tire 14 is not limited to being measured directly by the pressure gauge 46, and can also be sensed indirectly by the change in the number of rotations of the pneumatic tire 14 (comparison with the other tires) or the like. The decrease in the internal pressure of the pneumatic tire 14 can be sensed by a known, indirect-type TPMS (tire pressure monitoring system).

## Claims

1. A vehicle speed control system (8) comprising:
a thermometer (32) measuring a temperature of a tire (14);
a pressure determining section (46) that determines an internal pressure of the tire; and
a control device (40) controlling a speed of a vehicle (36) based on a measured temperature of the tire obtained by the thermometer;
wherein the control device carries out speed limiting of the vehicle in a case in which the measured temperature exceeds an upper temperature limit (T1) that is set in advance; and
wherein the control device carries out speed limiting of the vehicle in a case in which the internal pressure obtained at the pressure determining section is less than a lower pressure limit (P1), that is set in advance, and the temperature of the tire measured by the thermometer exceeds an upper temperature limit at a time of reduced internal pressure (T2) that is set in advance;
wherein the lower pressure limit is indicative of a puncture of the pneumatic tire.

2. The vehicle speed control system (8) of claim 1, wherein the control device (40) cancels the speed limiting in a case in which, after the speed limiting is carried out, the measured temperature becomes less than or equal to the upper temperature limit (T1).

3. The vehicle speed control system (8) of any preceding claim, wherein the control device (40) cancels the speed limiting in a case in which, after the speed limiting is carried out, the measured temperature becomes less than or equal to the upper temperature limit at the time of reduced internal pressure (T2).

4. The vehicle speed control system (8) of any preceding claim, wherein the thermometer (32) measures a temperature of a bead portion (16) of the tire (14).

5. The vehicle speed control system (8) of any preceding claim, wherein the thermometer (32) measures a temperature of a tire surface that is closest to a belt end of the tire (14).

6. The vehicle speed control system (8) of any preceding claim, wherein:
the tire (14) is a run-flat tire having side reinforcing rubbers (44) at tire side portions (43), and
the thermometer (32) measures a temperature of a tire maximum width portion of the run-flat tire.

7. The vehicle speed control system (8) of any preceding claim, wherein the thermometer (32) is a non-contact-type thermometer and is provided at a rim (12A) to which the tire (14) is mounted.

8. The vehicle speed control system (8) of any preceding claim, further comprising:
a transmitter (34) provided at a rim (12A) and transmitting measured temperature data that is measured by the thermometer (32);
a receiver (38) provided at a vehicle body (36A) of the vehicle (36) and receiving the measured temperature data; and
the control device provided at the vehicle body.

9. The vehicle speed control system (8) of claim 8, wherein:
the pressure determining section has a pressure gauge (46) provided at the rim (12A) to which the tire (14) is mounted, and
the transmitter (34) transmits measured pressure data that is measured by the pressure gauge.

## Patentansprüche

1. Fahrzeuggeschwindigkeitsregelsystem (8), umfassend:
ein Thermometer (32), das eine Temperatur eines Reifens (14) misst;
einen Druckbestimmungsabschnitt (46), der einen Innendruck des Reifens bestimmt; und
eine Regelvorrichtung (40), die eine Geschwindigkeit eines Fahrzeugs (36) basierend auf einer durch das Thermometer erhaltenen gemessenen Temperatur des Reifens regelt;
wobei die Regelvorrichtung eine Geschwindigkeitsbegrenzung des Fahrzeugs ausführt in einem Fall, in dem die gemessene Temperatur eine obere Temperaturgrenze (T1) übersteigt, die im Voraus eingestellt wird; und
wobei die Regelvorrichtung eine Geschwindigkeitsbegrenzung des Fahrzeugs ausführt in einem Fall, in dem der am Druckbestimmungsabschnitt erhaltene Innendruck geringer ist als eine untere Druckgrenze (P1), die im Voraus eingestellt wird, und die durch das Thermometer gemessene Temperatur des Reifens zu einem Zeitpunkt von verringertem Innendruck (T2) eine obere Temperaturgrenze überschreitet, die im Voraus eingestellt wird;
wobei die untere Druckgrenze eine Panne des Luftreifens angibt.

2. Fahrzeuggeschwindigkeitsregelsystem (8) nach Anspruch 1, wobei die Regelvorrichtung (40) die Geschwindigkeitsbegrenzung aufhebt in einem Fall, in dem die gemessene Temperatur nach Ausführung der Geschwindigkeitsbegrenzung kleiner als oder gleich der oberen Temperaturgrenze (T1) wird.

3. Fahrzeuggeschwindigkeitsregelsystem (8) nach einem der vorhergehenden Ansprüche, wobei die Regelvorrichtung (40) die Geschwindigkeitsbegrenzung aufhebt in einem Fall, in dem die gemessene Temperatur nach Ausführung der Geschwindigkeitsbegrenzung zum Zeitpunkt von verringertem Innendruck (T2) kleiner als oder gleich der oberen Temperaturgrenze wird.

4. Fahrzeuggeschwindigkeitsregelsystem (8) nach einem der vorhergehenden Ansprüche, wobei das Thermometer (32) eine Temperatur eines Wulstabschnitts (16) des Reifens (14) misst.

5. Fahrzeuggeschwindigkeitsregelsystem (8) nach einem der vorhergehenden Ansprüche, wobei das Thermometer (32) eine Temperatur einer Reifenoberfläche, die einem Gürtelende des Reifens (14) am nächsten ist, misst.

6. Fahrzeuggeschwindigkeitsregelsystem (8) nach einem der vorhergehenden Ansprüche, wobei:
der Reifen (14) ein Notlaufreifen ist, der seitliche Verstärkungsgummis (44) an Reifenseitenteilen (43) aufweist, und
das Thermometer (32) eine Temperatur eines Abschnitts des Notlaufreifens mit maximaler Reifenbreite misst.

7. Fahrzeuggeschwindigkeitsregelsystem (8) nach einem der vorhergehenden Ansprüche, wobei das Thermometer (32) ein Thermometer der kontaktlosen Art ist und an einer Felge (12A) bereitgestellt ist, an der der Reifen (14) montiert ist.

8. Fahrzeuggeschwindigkeitsregelsystem (8) nach einem der vorhergehenden Ansprüche, ferner umfassend:
einen Sender (34), der an einer Felge (12A) bereitgestellt ist und Temperaturmessdaten überträgt, die von dem Thermometer (32) gemessen werden;
einen Empfänger (38), der an einer Fahrzeugkarosserie (36A) des Fahrzeugs (36) bereitgestellt ist und die Temperaturmessdaten empfängt; und
die an der Fahrzeugkarosserie bereitgestellte Regelvorrichtung.

9. Fahrzeuggeschwindigkeitsregelsystem (8) nach Anspruch 8, wobei:
der Druckbestimmungsabschnitt einen Druckmesser (46) aufweist, der an der Felge (12A) bereitgestellt ist, an der der Reifen (14) montiert ist, und
der Sender (34) Druckmessdaten überträgt, die von dem Druckmesser gemessen werden.

## Revendications

1. Système de régulation de vitesse de véhicule (8) comprenant :
un thermomètre (32) mesurant une température d'un pneu (14),
une section de détermination de pression (46) qui détermine une pression interne du pneu, et
un dispositif de régulation (40) régulant une vitesse d'un véhicule (36) sur la base d'une température mesurée du pneu obtenue par le thermomètre,
dans lequel le dispositif de régulation met en œuvre une limitation de vitesse du véhicule dans le cas où la température mesurée dépasse une limite de température supérieure (T1) qui est définie par avance, et
dans lequel le dispositif de régulation met en œuvre une limitation de vitesse du véhicule dans le cas où la pression interne obtenue au niveau de la section de détermination de pression est inférieure à une limite de pression inférieure (P1) qui est définie par avance, et la température du pneu mesurée par le thermomètre dépasse une limite de température supérieure à un moment de pression interne réduite (T2) qui est définie par avance,
dans lequel la limite de pression inférieure est indicative d'une crevaison du bandage pneumatique.

2. Système de régulation de vitesse de véhicule (8) selon la revendication 1, dans lequel le dispositif de régulation (40) annule la limitation de vitesse dans le cas où, après la mise en œuvre de la limitation de vitesse, la température mesurée devient inférieure ou égale à la limite de température supérieure (T1).

3. Système de régulation de vitesse de véhicule (8) selon l'une quelconque des revendications précédentes, dans lequel le dispositif de régulation (40) annule la limitation de vitesse dans le cas où, après la mise en œuvre de la limitation de vitesse, la température mesurée devient inférieure ou égale à la limite de température supérieure au moment de pression interne réduite (T2).

4. Système de régulation de vitesse de véhicule (8) selon l'une quelconque des revendications précédentes, dans lequel le thermomètre (32) mesure une température d'une partie de talon (16) du pneu (14).

5. Système de régulation de vitesse de véhicule (8) selon l'une quelconque des revendications précédentes, dans lequel le thermomètre (32) mesure une température d'une surface de pneu qui est la plus proche d'une extrémité de ceinture du pneu (14).

6. Système de régulation de vitesse de véhicule (8) selon l'une quelconque des revendications précédentes, dans lequel :
le pneu (14) est un pneu à roulage à plat comportant des caoutchoucs de renfort latéral (44) au niveau de parties latérales de pneu (43), et
le thermomètre (32) mesure une température d'une partie de largeur maximale de pneu du pneu à roulage à plat.

7. Système de régulation de vitesse de véhicule (8) selon l'une quelconque des revendications précédentes, dans lequel le thermomètre (32) est un thermomètre du type sans contact et est fourni au niveau d'une jante (12A) sur laquelle le pneu (14) est monté.

8. Système de régulation de vitesse de véhicule (8) selon l'une quelconque des revendications précédentes, comprenant en outre :
un émetteur (34) fourni sur une jante (12A) et transmettant des données de température mesurée qui sont mesurées par le thermomètre (32),
un récepteur (38) fourni au niveau d'une carrosserie de véhicule (36A) du véhicule (36) et recevant les données de température mesurée, et
le dispositif de régulation fourni au niveau de la carrosserie de véhicule.

9. Système de régulation de vitesse de véhicule (8) selon la revendication 8, dans lequel :
la section de détermination de pression présente une jauge de pression (46) fournie au niveau de la jante (12A) sur laquelle le pneu (14) est monté, et
l'émetteur (34) transmet des données de pression mesurée qui sont mesurées par la jauge de pression.
